**Europäisches Patentamt**

**European Patent Office**

**Office européen des brevets**

(19)

(11) **EP 1 393 804 A1**

(12) **EUROPÄISCHE PATENTANMELDUNG**

(43) Veröffentlichungstag:
   **03.03.2004 Patentblatt 2004/10**

(51) Int Cl.⁷: **B01J 37/02**, B01J 23/40,
   B01J 23/46, C01B 3/38,
   C01B 3/40, H01M 8/06

(21) Anmeldenummer: **02019014.6**

(22) Anmeldetag: **26.08.2002**

(84) Benannte Vertragsstaaten:
   **AT BE BG CH CY CZ DE DK EE ES FI FR GB GR
   IE IT LI LU MC NL PT SE SK TR**
   Benannte Erstreckungsstaaten:
   **AL LT LV MK RO SI**

(71) Anmelder: **Umicore AG & Co. KG**
   **63457 Hanau-Wolfgang (DE)**

(72) Erfinder:
   • **Baumann, Frank, Dr.**
     **63755 Alzenau (DE)**
   • **Wieland, Stephan, Dr.**
     **63069 Offenbach (DE)**

(74) Vertreter: **VOSSIUS & PARTNER**
   **Siebertstrasse 4**
   **81675 München (DE)**

(54) **Mehrschichtiger Katalysator zur autothermen Dampfreformierung von Kohlenwasserstoffen und Verfahren zu seiner Verwendung**

(57)    Die Erfindung betrifft einen Katalysator sowie ein Verfahren zur autothermen, katalytischen Dampfreformierung von Kohlenwasserstoffen unter Verwendung des Katalysators. Der Katalysator besitzt einen mehrschichtigen Aufbau und enthält eine untere, direkt auf einem Tragkörper liegende Katalysatorschicht und eine auf der unteren Katalysatorschicht liegende obere Katalysatorschicht, wobei die untere Katalysatorschicht vorzugsweise die partielle Oxidation und die obere Katalysatorschicht vorzugsweise die Dampfreformierung katalysiert. Jede Katalysatorschicht enthält mindestens ein Platingruppenmetall auf einem oxidischen Trägermaterial. Das Verfahren erfolgt in einem adiabatischen Prozess durch Leiten eines auf eine Vorwärmtemperatur erwärmten Eduktgemisches aus den Kohlenwasserstoffen, Sauerstoff und Wasser oder Wasserdampf über den mehrschichtigen Katalysator.

Katalysator und Verfahren finden Verwendung zur Erzeugung von wasserstoffhaltigen Brenngasen in Reformersystemen für Brennstoffzellen.

**EP 1 393 804 A1**

**Beschreibung**

Die Erfindung betrifft einen mehrschichtigen Katalysator zur Erzeugung von Wasserstoff durch autotherme Dampfreformierung. Weiterhin betrifft die Erfindung ein Verfahren zur autothermen Dampfreformierung von Kohlenwasserstoffen unter Verwendung dieses Katalysators. Dabei wird ein auf eine Vorwärmtemperatur erwärmtes Eduktgemisch aus Kohlenwasserstoffen, Sauerstoff und Wasser oder Wasserdampf über einen mehrschichtig aufgebauten Katalysator geleitet, der in der Lage ist, sowohl die partielle Oxidation als auch die Dampfreformierung von Kohlenwasserstoffen zu katalysieren. Das Verfahren findet Verwendung zur Erzeugung von Wasserstoff bzw. wasserstoffhaltigen Brenngasen in Reformersystemen für Brennstoffzellen.

Für die Produktion von Wasserstoff können bekanntermaßen Kohlenwasserstoffe bei hohen Temperaturen in der Gegenwart von Wasserdampf an einem geeigneten Katalysator zu Wasserstoff, Kohlenmonoxid und Kohlendioxid umgesetzt werden. Diese Reaktion (auch als "Dampfreformierung" bezeichnet) ist stark endotherm und läuft zum Beispiel nach folgender Reaktionsgleichung ab:

$$C_8H_{18} + 8\,H_2O \rightleftarrows 8\,CO + 17\,H_2 \qquad \Delta H = +\,1250\ kJ/mol \qquad (1)$$

Charakteristisch für die Dampfreformierungsreaktion (1) ist das sogenannte Dampf/Kohlenstoff-Verhältnis S/C (Steam to Carbon ratio). In der Reaktionsgleichung (1) ist S/C gleich 1.

Eine weitere, bekannte Möglichkeit zur Erzeugung von Wasserstoff ist die katalytische partielle Oxidation (engl. "Catalytic Partial Oxidation", abgekürzt "CPO"). Hierbei werden die Kohlenwasserstoffe in Gegenwart von Sauerstoff an einem Katalysator gemäß der Reaktionsgleichung für die partielle Oxidation (2) zu Kohlenmonoxid und Wasserstoff umgesetzt:

$$C_8H_{18} + 4\,O_2 \rightleftarrows 8\,CO(g) + 9\,H_2 \qquad \Delta H = -\,685\ kJ/mol \qquad (2)$$

Eine wichtige Kenngröße für die partielle Oxidation ist die Luftzahl $\lambda$, die als Verhältnis aus eingesetzter Molanzahl Sauerstoff zu der für eine vollständige Oxidation benötigten Molanzahl Sauerstoff definiert ist (siehe Reaktionsgleichung (3)):

$$C_8H_{18} + 12.5\,O_2 \rightleftarrows 8\,CO_2 + 9\,H_2O \qquad \lambda = 1 \qquad \Delta H = -5102\ kJ/mol \qquad (3)$$

Für einen vollständigen Umsatz des Kohlenwasserstoffs zu Kohlenmonoxid und Wasserstoff gemäß Gleichung (3) wird eine Luftzahl $\lambda < 1$, idealerweise $\lambda = 4/12,5 = 0,32$ benötigt.

Die vorliegende Erfindung befasst sich mit einer weiteren Möglichkeit der Wasserstoffgewinnung, der sogenannten autothermen Dampfreformierung. Dieses Verfahren kombiniert die Dampfreformierung (Gleichung (1)) mit der katalytischen, partiellen Oxidation (Gleichung (2)), wobei die exotherme, partielle Oxidation die notwendige Reaktionswärme für die endotherme Dampfreformierung liefert. Das Eduktgemisch kann hierbei auf eine Vorwärmtemperatur vorgewärmt werden. Das Produktgemisch befindet sich bei der am Reaktorausgang herrschenden Temperatur im thermodynamischen Gleichgewicht. Die autotherme Dampfreformierung verbindet die Vorteile der katalytischen, partiellen Oxidation (gutes Startverhalten) mit denen der Dampfreformierung (hohe Wasserstoffausbeuten). Das Verfahren ist damit gut geeignet für die on-board-Erzeugung von Wasserstoff für mobile Brennstoffzellensysteme aber auch für den Einsatz in kompakten Reformern für stationäre Brennstoffzellenanlagen.

Katalysatorsysteme für die autotherme Reformierung von Kohlenwasserstoffen sind bekannt. Der Stand der Technik wird nachfolgend dargestellt:

US-A-4,415,484 offenbart einen Katalysator für die Verwendung in einem autothermen Reformierungsreaktor. Der Katalysator enthält 0,01 bis 6% Rhodium, sowie 10 bis 35 % Calciumoxid auf einem Träger aus Aluminiumoxid, welches darüber hinaus etwa 3 bis 15 % Magnesiumoxid enthält. Der Katalysator wird in Form von Pellets eingesetzt und zeichnet sich besonders durch eine geringe Neigung zur Verkokung bei niedrigen Sauerstoff/Kohlenstoff-Verhältnissen aus. Ein typisches Katalysatorsystem zur Durchführung der autothermen Reformierung enthält gemäß diesem Dokument auf etwa einem Drittel seiner Länge einen Eisenoxid-Katalysator für die partielle Oxidation und auf zwei Drittel seiner Länge den beschriebenen Rhodium-Katalysator. Ein mehrschichtiger Katalysatoraufbau wird nicht beschrieben.

WO 98/55227 beschreibt einen bifunktionellen Katalysator für die partielle Oxidation von Kohlenwasserstoffen, der sowohl eine Aktivität für die Dehydrierung der Kohlenwasserstoffe besitzt, als auch die Fähigkeit hat, die Kohlenwasserstoffkette selektiv zu oxidieren. Die Dehydrieraktivität wird durch Metalle der 8. Gruppe des Periodensystems zur Verfügung gestellt, während die selektive Oxidation durch ionisierten Sauerstoff erfolgt. Quelle für ionisierten Sauerstoff sind Oxide, die mit einer Fluoritstruktur oder einer Perowskitstruktur kristallisieren wie zum Beispiel Zirkonoxid, Ceroxid, Bismutoxid usw. Ein bevorzugter Katalysator ist zum Beispiel Pt/CeGdO. Er wird in pelletierter Form mit Durchmessern von 1,125 bis 1,5 Zoll (2,8 bis 3,8 cm) eingesetzt.

WO 99/48805 beschreibt ein Verfahren zur katalytischen Erzeugung von Wasserstoff durch eine selbstunterhaltende, partielle Oxidation und Dampfreformierung von Kohlenwasserstoffen, wobei eine Mischung aus den Kohlenwasserstoffen und einem Sauerstoff enthaltenden Gas und gegebenenfalls Dampf an einem Katalysator umgesetzt wird, der Rhodium auf einem Trägermaterial dispergiert enthält, welches als Kationen Cer und Zirkon enthält. Der Katalysator wird in granulierter Form eingesetzt. Ein mehrschichtiger Aufbau des Katalysators wird nicht beschrieben.

DE 197 27 841 A1 beschreibt ein Verfahren und eine Vorrichtung zur autothermen Reformierung von Kohlenwasserstoffen, bei denen der Brennstoff über eine Zuführungseinrichtung einem zweistufigen Reformierreaktor zugeführt wird. Das entstehende Reformat wird in einem Wärmetauscher im Gegenstrom und in wärmetauschender Weise zu von außen nach innen geführten Ausgangsstoffen der Reformierung geleitet. Der über die Zuführungseinrichtung zugeführte Brennstoff wird mit dem Ausgangsstoff direkt auf die einen Katalysator aufweisenden Reaktionszone aufgebracht, in der die Verbrennung und Reformierung bzw. Katalyse durchgeführt wird. Der Reformierreaktor enthält in einem oberen Bereich einen mit Katalysator beschichteten Wabenkörper und in einem unteren Bereich eine mit Katalysator beschichtete Schüttung. Anstelle der Schüttung kann auch ein Wabenkörper verwendet werden. Auch hier wird ein mehrschichtiger Aufbau des Katalysators nicht beschrieben.

In EP 0 112 613 B1 wird ein Verfahren zur autothermen Reformierung von Kohlenwasserstoffen beschrieben, bei dem die partielle Oxidation in Zone 1, die Dampfreformierung räumlich davon getrennt, in Zone 2 erfolgt. Für die partielle Oxidation werden Pt- und Pd-haltige Katalysatoren, für die Dampfreformierung edelmetallhaltige Katalysatoren verwendet. Ein mehrschichtiger Aufbau des Katalysators ist nicht offenbart.

WO 99/33567 beschreibt Katalysatoren für die partielle Oxidation von Kohlenwasserstoffen, deren monolithische Träger eine mehrlagige Struktur mit unterschiedlicher Porosität besitzen. In dieser Schrift bezieht sich der mehrlagige Aufbau nicht auf den Katalysator selbst, sondern auf das Trägersubstrat.

In DE 100 62 662 A1 wird ein mehrschichtiges Katalysatorsystem zur Reformierung von Methanol beschrieben. Das Katalysatorsystem enthält eine erste katalytische Komponente auf Basis von Kupferoxid und Zinkoxid, die als untere Schicht hauptsächlich die Dampfreformierung katalysiert, sowie eine zweite, obere katalytische Schicht, die ein Edelmetall (Platin oder Palladium) und ein Metalloxid enthält und die hauptsächlich die partielle Oxidation von Methanol aktiviert. Das hierin beschriebene Katalysatorsystem ist für die autotherme Reformierung von Kohlenwasserstoffen jedoch nicht verwendbar, da es aufgrund der höheren Temperaturen zur Zersetzung bzw. Reduktion der Unedelmetalloxide (CuO, ZnO) und nachfolgend zu einer Legierungsbildung mit der Edelmetallkomponente kommt, so dass die Langzeitstabilität nicht gegeben ist.

Die Anmelderin hat sich eingehend mit dem Problem der autothermen Reformierung von Kohlenwasserstoffen befasst. So wird beispielsweise in der EP 1 157 968 A1 ein Verfahren zur autothermen Dampfreformierung von Kohlenwasserstoffen beschrieben, das adiabatisch betrieben wird und einen Edelmetallkatalysator auf einem Tragkörper benötigt.

Generelle Nachteile der vorbeschriebenen Verfahren sind der hohe Platzbedarf der Reformereinheiten sowie die geringe Wasserstoffausbeute, die zu einem niedrigen Reformerwirkungsgrad führt. Dieser niedrigere Reformerwirkungsgrad führt dann wiederum dazu, dass das gesamte Brennstoffzellen-Antriebssystem (bestehend aus Brennstoffzellen-Stack, Reformereinheit und Steuerungseinheit) einen niedrigeren Gesamtwirkungsgrad besitzt, der nur unwesentlich besser ist als derjenige der modernen optimierten Dieselaggregate für PKWs.

Bei Reformern, die in stationären Brennstoffzellensystemen Verwendung finden, führt der niedrige Wirkungsgrad zu einer geringeren Gesamtausbeute an Strom und Wärme, wodurch die Wettbewerbsfähigkeit mit konventionellen Kraft-Wärme-gekoppelten Heiz-Systemen (KWK-Systemen) gemindert wird.

Es besteht Bedarf an Verfahren zur autothermen Dampfreformierung von Kohlenwasserstoffen, die sehr hohe Wasserstoffausbeuten aufweisen und damit sehr gut für den Einsatz in mobilen und stationären Brennstoffzellensystemen geeignet sind. Weiterhin besteht Bedarf an für das Verfahren geeignete Katalysatoren.

Die Erfindung stellt ein Katalysator sowie ein Verfahren zur autothermen, katalytischen Dampfreformierung von Kohlenwasserstoffen unter Verwendung dieses Katalysators bereit.

Der erfindungsgemäße Katalysator weist auf einem Tragkörper eine mehrlagige Beschichtung unfassend zwei unterschiedliche Katalysatorschichten, welche jeweils mindestens ein Platingruppenmetall auf einem oxidischen Trägermaterial enthalten. Die mehrlagige Beschichtung besitzt neben einer ersten, unteren Katalysatorschicht, die vorzugsweise die partielle Oxidation ("CPO" nach Gl. (2)) katalysiert, eine zweite, obere Katalysatorschicht, die hauptsächlich eine Aktivität bezüglich der Dampfreformierung (nach Gl. (1)) aufweist. Im Vergleich zur DE 100 62 662 A1 ist die Schichtfolge, abgesehen von den unterschiedlichen Katalysatorbestandteilen, umgekehrt.

Bei dem erfindungsgemäßen Verfahren wird ein auf eine Vorwärmtemperatur erwärmtes Eduktgemisch aus Kohlenwasserstoffen, Sauerstoff und Wasser oder Wasserdampf über den Katalysator geleitet wird, wobei eine adiabatische Reaktionsführung erfolgt. Das Verfahren ist insgesamt gesehen einstufig, das heißt das Eduktgemisch wird über einen einzigen, mehrschichtigen Katalysator geleitet, der in der Lage ist, durch die katalytische, partielle Oxidation des Eduktgemisches die für die endotherme Dampfreformierung benötigte Energie bereitzustellen. Hierbei erhöht sich die Temperatur des Eduktgemisches von der Vorwärmtemperatur auf die notwendige Reaktionstemperatur zwischen 600 und 900° C. Partielle Oxidation und Dampfreformierung gehen auf dem Katalysator gleitend ineinander über. Die Abfolge von exothermer katalytischer, partieller Oxidation und endothermer Dampfreformierung ergeben ein einheitliches Temperaturprofil im Katalysator, das keine großen Temperaturschwankungen und -spitzen aufweist.

Der erfindungsgemäße Katalysator enthält auf einem Tragkörper eine Katalysatormasse, die in Form einer mehrfachen Beschichtung auf den geometrischen Oberflächen des Tragkörpers aufgebracht ist. Bevorzugte Tragkörper sind monolithische Wabenkörper aus Keramik oder Metall, offenzellige keramische oder metallische Schaumkörper, Metallbleche oder unregelmäßig geformte Bauteile. Die Gesamtdicke der katalytischen Beschichtung liegt in der Regel zwischen 20 und 200 µm.

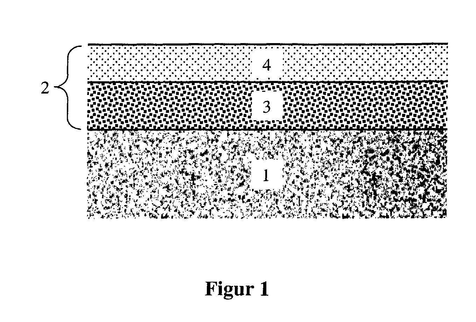

Im Falle einer zweilagigen Beschichtung enthält die Katalysatormasse neben einer ersten, unteren Katalysatorschicht, die vorzugsweise die partielle Oxidation katalysiert, eine zweite, obere Katalysatorschicht, die eine Aktivität bezüglich der Dampfreformierung aufweist. Eine schematische Darstellung eines möglichen Aufbaus des erfindungsgemäßen Katalysators ist in **Figur 1** gezeigt. Der Katalysator umfasst einen Tragkörper (1), auf dem eine mehrschichtige Katalysatormasse (2) aufgebracht ist, die wiederum eine untere Schicht (3) und eine obere Schicht (4) unfasst. Die untere Katalysatorschicht kann die partielle Oxidation, die obere Katalysatorschicht kann die Dampfreformierung katalysieren.

Die beiden unterschiedlichen Katalysatorschichten enthalten jeweils mindestens ein Platingruppenmetall auf einem feinteiligen, oxidischen Trägermaterial. Es handelt sich also um sogenannte geträgerte Katalysatoren oder Trägerkatalysatoren, bei denen das Edelmetall in hoher Verteilung (d.h. Dispersion) auf das oxidische Trägermaterial aufgebracht ist. Der Begriff des Trägerkatalysators bezieht sich im Rahmen dieser Erfindung nur auf die Katalysatormasse und muß von dem Katalysator unterschieden werden, der den Tragkörper (1) mit der darauf aufgebrachten Katalysatormasse (2) umfasst.

Die untere Katalysatorschicht (3), die die partielle Oxidation katalysiert, enthält als Edelmetall bevorzugt 0,1 bis 5 Gew.-% Platin, bezogen auf ihr Gesamtgewicht. Platin weist eine hohe Aktivität für die Oxidation von Kohlenwasserstoffen auf. Zur Anpassung der Oxidationsaktivität an die Erfordernisse des Prozesses kann die Katalysatormasse noch andere Edelmetalle, beispielsweise Palladium oder Rhodium, enthalten. Bevorzugt wird eine Katalysatormasse eingesetzt, die Platin auf Aluminiumoxid und Oxiden der Seltenen Erden enthält.

Die obere Katalysatorschicht (4) (zur Dampfreformierung) enthält als Edelmetall bevorzugt 0,1 bis 5 Gew.-% Rhodium, bezogen auf ihr Gesamtgewicht. Rhodium weist eine hohe Aktivität für die Dampfreformierung auf, wobei gleichzeitig seine Oxidationsaktivität, verglichen mit der von Platin, gering ist. Bevorzugt wird eine Katalysatormasse verwendet, die Rhodium auf einem aktiven Aluminiumoxid enthält. Diese Katalysatorschicht kann zusätzlich noch Ceroxid zur Verminderung von Rußablagerungen und zur Erhöhung der Schwefelresistenz enthalten.

Als oxidisches Trägermaterial für die Platingruppenmetalle kommen beispielsweise Oxide wie Aluminiumoxid, Siliciumdioxid, Titandioxid oder Mischoxide hiervon und Zeolithe in Frage. Bevorzugt werden Materialien mit einer spezifischen Oberfläche von mehr als 10 m$^2$/g eingesetzt, um eine möglichst hochdisperse Verteilung der katalytisch aktiven Komponenten auf dieser großen Oberfläche zu ermöglichen. Die Techniken zur Herstellung eines solchen Trägerkatalysators und zur Beschichtung eines inerten Tragkörpers damit sind dem Fachmann bekannt.

Zur thermischen Stabilisierung der Katalysatormasse kann sie zusätzlich wenigstens ein Oxid ausgewählt aus Boroxid, Bismutoxid, Galliumoxid, Oxide der Alkalimetalle, Oxide der Erdalkalimetalle, Oxide der Nebengruppenelemente und Oxide der Seltenerdmetalle beispielsweise in einer Konzentration von bis zu 40 Gew.-%, bezogen auf das Gesamtgewicht der Katalysatormasse, enthalten.

Der erfindungsgemäße mehrschichtige Katalysator weist erhebliche Vorteile gegenüber konventionellen Katalysatoren auf. So haben die Erfinder festgestellt, dass überraschenderweise durch das Aufbringen der oberen Katalysatorschicht (zur Dampfreformierung) auf die untere, oxidationsaktive Schicht insgesamt die partielle Oxidation des Eduktgemisches am Einlauf des Katalysators gedämpft wird. Dadurch werden hohe Temperaturspitzen vermieden, die den Katalysator zerstören könnten. Zusätzlich wird die Ausbeute an Wasserstoff erhöht und der Gehalt an Restkohlenwasserstoffen, insbesondere von Methan, abgesenkt.Das erfindungsgemäße Verfahren kann mit aliphatischen und/oder aromatischen Kohlenwasserstoffen (Methan, Propan, Toluol etc.) oder Kohlenwasserstoffgemischen (z.B. Erdgas, Benzin, Heizöl oder Dieselöl) betrieben werden. Je nach verwendetem Kohlenwasserstoff kann mit Dampf/ Kohlenstoff-Verhältnissen S/C zwischen 0,7 und 5 gearbeitet werden. Die Luftzahl λ des Eduktgemisches und seine Vorwärmtemperatur sollte dabei so gewählt, daß sich am Ausgang des Katalysators eine Temperatur zwischen 600 und 900° C einstellt.

Das vorgeschlagene Verfahren stellt nur einen Teil eines Gesamtverfahrens zur Gewinnung von Wasserstoff für mobile und stationäre Brennstoffzelleneinheiten dar. Das Gesamtverfahren umfasst neben der autothermen Reformierung noch Verfahrensstufen zur Entfernung von Kohlenmonoxid aus dem Reformat, beispielsweise durch ein oder mehrere Wassergas-Shift-Stufen. Die Reaktion in den Wassergas-Shift-Stufen ist exotherm und kann im Dauerbetrieb der Reformereinheit die notwendige Wärmemenge zur Vorwärmung des Eduktgemisches auf eine geeignete Vorwärmtemperatur beispielsweise zwischen etwa 270 und 350° C liefern. Zur schnellen Inbetriebnahme des Reformersystems kann das Eduktgemisch auch kurzzeitig elektrisch vorgeheizt werden. Die geringe thermische Masse des Katalysators führt vorteilhafterweise dazu, daß schon nach wenigen Sekunden die volle Wasserstoffproduktion einsetzt.

Weitere Ausführungsformen der vorliegenden Erfindung betreffen sogenannte gradierte sowie dreischichtige Katalysatoranordnungen.

Bei gradierten Katalysatoranordnungen kann die Katalysatormasse auf einem monolithischen Tragkörper, der eine Länge L aufweist und von einer Eintrittsstirnfläche bis zu einer Austrittsstirnfläche von Strömungskanälen durchzogen ist, aufgebracht sein und eine untere, direkt auf dem Tragkörper liegende Katalysatorschicht und eine auf der unteren Katalysatorschicht liegende obere Katalysatorschicht enthalten. Dabei ist die untere Schicht über die gesamte Länge L des Tragkörpers, und die obere Schicht nur auf einem bestimmten Segment, zum Beispiel dem austrittsseitigen Teil des Tragkörpers aufgebracht. Die genaue Gestaltung der Schichtabfolge richtet sich dabei nach der Konstruktion, der Geometrie und der Wirkungsweise des Reformersystems.

Bei dreischichtigen Katalysatoranordnungen kann die Katalysatormasse eine weitere Katalysatorschicht, beispielsweise für die Kohlenmonoxid-Konvertierung besitzen, die als dritte Lage ganz oder partiell auf der zweiten Beschichtung aufgebracht ist. Die Katalysatorschicht für die Kohlenmonoxid-Konvertierung kann als katalytisch aktive Komponenten wenigstens eines der Edelmetalle Pt, Pd, Rh, Ru, Ir, Os und Au auf einem oxidischen Trägermaterial aus der Gruppe Aluminiumoxid, Siliciumdioxid, Titandioxid, Seltenerdoxide oder Mischoxide hiervon oder Zeolithe enthalten. Auch mehr als dreischichtige Aufbauten, beispielsweise vierschichtige Anordnungen, sind möglich.

Das nachfolgende Beispiel sowie das Vergleichsbeispiel sollen das Wesen der Erfindung näher erläutern. Die Erfindung ist jedoch nicht auf diese Ausführungsformen beschränkt.

## BEISPIELE

### Beispiel 1

Es wurde Methan nach dem erfindungsgemäßen Verfahren reformiert, wobei ein zweischichtiger Katalysator zum Einsatz kam. Bei dem Katalysator handelte es sich um einen katalytisch beschichteten keramischen Wabenkörper mit einer Zelldichte von 62 Zellen/$cm^2$ und einem Volumen von 30 ml.

Die untere Schicht des Zweischichtkatalysators bestand aus einem Platin/Aluminiumoxid/Ceroxid/Zirkonoxid-Trägerkatalysator. Die obere Schicht des Katalysators bestand aus einem Rhodium/Aluminiumoxid-Trägerkatalysator. Die Gesamtkonzentration der katalytischen Beschichtung betrug 150 g/l; die Beschichtungskonzentration der Edelmetalle war 0,5g/l Platin und 0,5 g/l Rhodium.

Zur Durchführung der autothermen Reformierung wurden Edukte auf 600 °C erhitzt und dann gemeinsam über den Katalysator geleitet. Folgende Stoffströme wurden eingesetzt:

| | |
|---|---|
| Methan | 152 g/h |
| Wasser | 454 g/h |
| Luft | 319 Nl/h |

Die Eingangstemperatur des Stoffgemisches betrug 610°C, die Ausgangstemperatur lag bei 645°C. Das Trockenreformat des Zweischichtkatalysators enthielt 45,9 Vol.-% Wasserstoff, im Vergleich zu 43,4 Vol.-% im Trockenreformat des Einschichtkatalysators von Vergleichsbeispiel 1. Der CO-Gehalt betrug lediglich 4,1 Vol.-% und der Restmethangehalt ($CH_4$) konnte durch die Verwendung des Zweischichtkatalysators deutlich auf 1 Vol.-% abgesenkt werden. Die Ergebnisse sind in Tabelle 1 zusammengestellt.

### Vergleichsbeispiel (VB1)

Als Vergleichsbeispiel kam ebenfalls ein katalytisch beschichteter keramischer Wabenkörper mit einer Zelldichte von 62 Zellen/$cm^2$ und einem Volumen von 30 ml zum Einsatz. Die katalytische Beschichtung bestand bei dem Einschichtsystem aus einem Rhodium/Aluminiumoxid-Trägerkatalysator und war in einer Konzentration von 150 Gramm pro Liter auf den Wabenkörper aufgebracht. Die Beschichtungskonzentration des Rhodiums betrug 1 g/l. Es wurde Methan nach dem in Beispiel 1 beschriebenen Verfahren reformiert.

Zur Durchführung der autothermen Reformierung wurden die Edukte wiederum auf 600 °C erhitzt und dann gemeinsam über den Katalysator geleitet. Die Stoffströme von Methan, Wasser und Luft waren identisch zu Beispiel 1.

Die Eingangstemperatur betrug 605°C, die Ausgangstemperatur lag bei 640°C. Das Trockenreformat des Einschichtkatalysators enthielt 43,4 Vol.-% Wasserstoff (im Vergleich zu 45,9 Vol.-% beim erfindungsgemäßen Zweischichtkatalysator von Beispiel 1). Die Konzentrationen an unerwünschtem CO (4,8 Vol.-%) und Restmethan (1,7 Vol.-%) lagen deutlich höher. Die Ergebnisse sind ebenfalls in Tabelle 1 zusammengestellt. Man erkennt daraus die Überlegenheit des erfindungsgemäßen Mehrschichtkatalysatorsystems.

Tabelle 1:

| Vergleich des erfindungsgemäßen Mehrschichtkatalysators mit einem konventionellen einschichtigem Katalysator bei der autothermen Reformierung von Methan | | | | |
|---|---|---|---|---|
| | Wasserstoff (Vol.-%) | Kohlendioxid (Vol.-%) | Kohlenmonoxid (Vol.-%) | Restmethan (Vol.-%) |
| **Beispiel 1** | 45,9 | 13,8 | 4,1 | 1,0 |
| **Vergleichs-beispiel (VB 1)** | 43,4 | 12,7 | 4,8 | 1,7 |

## Patentansprüche

1. Katalysator zur autothermen katalytischen Reformierung von Kohlenwasserstoffen, umfassend einem Tragkörper und einer darauf aufgebrachten mehrschichtigen Katalysatormasse, wobei diese eine untere, direkt auf dem Tragkörper liegende Katalysatorschicht und eine auf der unteren Katalysatorschicht liegende obere Katalysatorschicht enthält, wobei die untere Katalysatorschicht vorzugsweise die partielle Oxidation und die obere Katalysatorschicht vorzugsweise die Dampfreformierung katalysiert.

2. Katalysator nach Anspruch 1, wobei die untere Katalysatorschicht Platin in einer Konzentration von 0,1 bis 5 Gew.-%, und die obere Katalysatorschicht Rhodium in einer Konzentration von 0,1 bis 5 Gew.-%, bezogen auf ihr Gesamtgewicht, enthält.

3. Katalysator nach Anspruch 1 oder 2, wobei die Katalysatorschichten als weitere katalytisch aktive Komponenten Edelmetalle, Seltenerdmetalle und Unedelmetalle der Nebengruppen enthalten.

4. Katalysator nach Anspruch 3, wobei die Katalysatorschichten jeweils mindestens ein Metall aus der 8. Nebengruppe auf einem oxidischen Trägermaterial aus der Gruppe Aluminiumoxid, Siliciumdioxid, Titandioxid, Boroxid, Bismutoxid, Galliumoxid, Oxide der Alkalimetalle, Oxide der Erdalkalimetalle, Oxide der Nebengruppenelemente, Seltenerdoxide oder Mischoxide hiervon oder Zeolithe enthalten.

5. Katalysator nach Anspruch 4, wobei die Katalysatormasse auf einem monolithischen Tragkörper, der eine Länge L aufweist und von einer Eintrittsstirnfläche bis zu einer Austrittsstirnfläche von Strömungskanälen durchzogen ist, eine untere, direkt auf dem Tragkörper liegende, Katalysatorschicht und eine auf der unteren Katalysatorschicht liegende obere Katalysatorschicht enthält, wobei die untere Schicht über die gesamte Länge des Tragkörpers und die obere Schicht nur auf einem Teil des Tragkörpers aufgebracht ist.

6. Katalysator nach Anspruch 5, wobei er eine weitere Katalysatorschicht für die Kohlenmonoxid-Konvertierung enthält, die als dritte Schicht auf einem Teil der zweiten Katalysatorschicht aufgebracht ist.

7. Katalysator nach Anspruch 6, wobei die Katalysatorschicht für die Kohlenmonoxid-Konvertierung als katalytisch aktive Komponenten wenigstens eines der Edelmetalle Pt, Pd, Rh, Ru, Ir, Os und Au auf einem oxidischen Trägermaterial aus der Gruppe Aluminiumoxid, Siliciumdioxid, Titandioxid, Seltenerdoxide oder Mischoxide hiervon oder Zeolithe enthält.

8. Katalysator nach Anspruch 7, wobei die Katalysatorschicht für die Kohlenmonoxid-Konvertierung als weitere katalytisch aktive Komponenten mindesten ein Seltenerdmetall und wenigsten ein Unedelmetall der Nebengruppen enthält.

9. Verfahren zur autothermen, katalytischen Dampfreformierung von Kohlenwasserstoffen durch Leiten eines auf eine Vorwärmtemperatur erwärmten Eduktgemisches aus Kohlenwasserstoffen, Sauerstoff und Wasser oder Wasserdampf über einen mehrschichtigen Katalysator, wobei es adiabatisch betrieben wird und der Katalysator auf einem Tragkörper eine Beschichtung umfassend einer mehrschichtigen Katalysatormasse aufweist, wobei die untere Katalysatorschicht vorzugsweise die partielle Oxidation, und die obere Katalysatorschicht vorzugsweise die Dampfreformierung katalysiert.

10. Verfahren nach Anspruch 9, wobei die untere Katalysatorschicht Platin in einer Konzentration von 0,1 bis 5 Gew.-%, und die obere Katalysatorschicht Rhodium in einer Konzentration von 0,1 bis 5 Gew.-%, bezogen auf ihr Gesamtgewicht, enthält.

11. Verfahren nach Anspruch 9 oder 10, wobei die einzelnen Katalysatorschichten zusätzlich wenigstens ein Oxid ausgewählt aus der Gruppe Boroxid, Bismutoxid, Galliumoxid, Oxide der Alkalimetalle, Oxide der Erdalkalimetalle, Oxide der Nebengruppenelemente und Oxide der Seltenerdmetalle in einer Konzentration von bis zu 70 Gew.-%, bezogen auf das Gesamtgewicht der Katalysatormasse, enthalten.

12. Verwendung des Katalysators nach den Ansprüchen 1 bis 8 zur autothermen Dampfreformierung von Kohlenwasserstoffen in Reformern für Brennstoffzellensysteme.

13. Reformer zur katalytischen Dampfreformierung von Kohlenwasserstoffen zur Wasserstofferzeugung für Brennstoffzellensysteme, wobei er die Katalysatormasse nach den Ansprüchen 1 bis 8 enthält.

**Figur 1**

**Europäisches Patentamt**

## EUROPÄISCHER RECHERCHENBERICHT

Nummer der Anmeldung

EP 02 01 9014

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02 18269 A (ENGELHARD CORP) 7. März 2002 (2002-03-07) * das ganze Dokument * --- | 1-13 | B01J37/02 B01J23/40 B01J23/46 C01B3/38 |
| X | US 5 459 119 A (ABE FUMIO ET AL) 17. Oktober 1995 (1995-10-17) * Ansprüche 1-3,6-9,12,14-16 * * Spalte 5, Zeile 62 - Spalte 6, Zeile 7 * * Spalte 8, Zeile 65 - Spalte 12, Zeile 53 * * Tabelle 1 * * Abbildungen 1B,1C,1E * --- | 1-8 | C01B3/40 H01M8/06 |
| X | EP 0 462 593 A (NIPPON CATALYTIC CHEM IND) 27. Dezember 1991 (1991-12-27) * Ansprüche 1-3,5,6 * * Beispiele 2,3,6 * ----- | 1-5 | |

**RECHERCHIERTE SACHGEBIETE (Int.Cl.7)**

B01J
C01B
H01M

Der vorliegende Recherchenbericht wurde für alle Patentansprüche erstellt

| Recherchenort | Abschlußdatum der Recherche | Prüfer |
|---|---|---|
| DEN HAAG | 7. Januar 2003 | Zuurdeeg, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**EP 1 393 804 A1**

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-01-2003

| Im Recherchenbericht angeführtes Patentdokument | | | Datum der Veröffentlichung | Mitglied(er) der Patentfamilie | | Datum der Veröffentlichung |
|---|---|---|---|---|---|---|
| WO 0218269 | A | | 07-03-2002 | US | 6436363 B1 | 20-08-2002 |
| | | | | AU | 8679301 A | 13-03-2002 |
| | | | | WO | 0218269 A2 | 07-03-2002 |
| US 5459119 | A | | 17-10-1995 | JP | 3281087 B2 | 13-05-2002 |
| | | | | JP | 6233918 A | 23-08-1994 |
| EP 0462593 | A | | 27-12-1991 | JP | 3061399 B2 | 10-07-2000 |
| | | | | JP | 4059049 A | 25-02-1992 |
| | | | | CA | 2044984 A1 | 21-12-1991 |
| | | | | DE | 69105366 D1 | 12-01-1995 |
| | | | | DE | 69105366 T2 | 18-05-1995 |
| | | | | EP | 0462593 A1 | 27-12-1991 |
| | | | | KR | 9510783 B1 | 23-09-1995 |
| | | | | US | 5177041 A | 05-01-1993 |

EPO FORM P0461

Für nähere Einzelheiten zu diesem Anhang : siehe Amtsblatt des Europäischen Patentamts, Nr.12/82